Europäisches Patentamt

European Patent Office

Office européen des brevets

(11) Numéro de publication: **0014134**
A1

# DEMANDE DE BREVET EUROPEEN

(21) Numéro de dépôt: 80400074.3

(22) Date de dépôt: 17.01.80

(51) Int. Cl.³: **B 64 C 25/58,** F 16 F 9/06

(30) Priorité: 18.01.79 FR 7901192

(43) Date de publication de la demande: 06.08.80
Bulletin 80/16

(84) Etats contractants désignés: DE GB IT

(71) Demandeur: MESSIER-HISPANO-BUGATTI (S.A), 5, rue Louis Lejeune, F-92120 Montrouge (FR)

(72) Inventeur: Masclet, Jean, 11 Boulevard Davout, F-75020 Paris (FR)
Inventeur: Veaux, Jacques, 16 Boulevard de la Liberté, F-92320 Chatillon (FR)

(74) Mandataire: Berogin, Francis, Société S.E.D.I.C. 21, rue Molière, F-92120 Montrouge (FR)

(54) Amortisseur pour béquille de queue d'aérodyne.

(57) L'invention a pour objet un amortisseur pour béquille de queue d'aérodyne.

Il comprend un cylindre (1) renfermant une chambre de gaz sous pression (3) et un volume de fluide hydraulique (4) adjacent, disposé dans une chemise (6) interne au cylindre (1), ainsi qu'une tige (7) coulissant dans le cylindre (1) et portant un piston (9) muni d'orifice permanent (10) de laminage en compression du fluide hydraulique passant du volume (4) à la chambre annulaire (16).

La section des orifices (10) est telle qu'il y a amortissement sur toute la course pour des vitesses d'enfoncement inférieures ou égales à un premier seuil choisi, cavitation puis amortissement pour des vitesses d'enfoncement comprises entre ce premier seuil et un second seuil, et cavitation sans amortissement pour des vitesses supérieures au second seuil, le dispositif se comportant alors comme un limiteur d'effort transmis à l'aérodyne.

Application à l'équipement des aérodynes, en particulier les béquilles de queue pour hélicoptères.

ACTORUM AG

1

# AMORTISSEUR POUR BEQUILLE DE QUEUE D'AERODYNE

L'invention a pour objet un amortisseur oléopneumatique du type télescopique pour béquille de queue d'aérodyne, destiné à amortir les chocs qui peuvent se produire entre la queue, équipée d'une béquille, d'un aérodyne et la piste d'atterrissage, lorsque l'aérodyne, par exemple un hélicoptère, effectue un atterrissage trop cabré par·rapport à la piste, qui peut être par exemple le pont d'envol d'un navire porte-aéronef ou d'une plate-forme en mer.

Les amortisseurs de ce type actuellement montés sur les béquilles de queue d'aérodyne sont de structure classique, comprenant un cylindre renfermant une chambre de travail ou de compression remplie de fluide hydraulique laminé au travers d'orifices de laminage, montés sur une tige renfermant une chambre de gaz sous pression, lorsque la tige est enfoncée dans le cylindre, et venant comprimer la chambre de gaz sous pression, le laminage du fluide au travers des orifices calibrés assurant l'absorption d'énergie, donc l'amortissement du choc, et la chambre de gaz sous pression assurant le retour élastique en position d'équilibre de la tige dans le cylindre. On connait également d'autres réalisations dans lesquelles la chambre de gaz sous pression et le volume de fluide hydraulique sont disposés dans le cylindre, le fluide hydraulique étant laminé en passant d'une chambre de fluide adjacente à la chambre de gaz vers une chambre annulaire définie entre le cylindre et la tige, lorsque cette dernière est enfoncée dans le cylindre.

La plupart de ces dispositifs connus présentent l'in-

2

convénient de n'absorber de l'énergie, et donc de ne procurer un amortissement, que pour des vitesses d'enfoncement de la tige dans le cylindre limitées aux vitesses verticales normales d'atterrissage, qui sont de l'ordre de 3 m/s. Si, parce que l'aérodyne se trouve en difficulté pour une raison quelconque, la béquille de queue vient à heurter le sol avec une vitesse verticale supérieure aux vitesses normales d'atterrissage, ces amortisseurs connus se comportent alors comme des éléments pratiquement rigides, et transmettent à la queue de l'aérodyne, sans amortissement, l'intégralité de l'effort subi au contact avec le sol, ce qui peut provoquer de considérables dommages à la structure de l'aérodyne.

Il a déjà été proposé, notamment dans les brevets français n° 1 019 546 et 2 157 107, des amortisseurs oléopneumatiques de type télescopique, avec une seule chambre de gaz, munis de dispositifs à soupape en plus d'orifices permanents de laminage en compression, pour obtenir une adaptation de la section des orifices de laminage à la vitesse d'enfoncement du piston et de la tige dans le cylindre, lorsque cette dernière devient supérieure à un seuil correspondant à une certaine charge élastique exercée par des ressorts sollicitant les soupapes.

Mais ces dispositifs connus ne fonctionnent pas non plus comme des limiteurs de l'effort transmis par l'amortisseur du sol à la queue de l'aérodyne, du fait de l'interposition constante d'orifices de laminage entre le fluide hydraulique déplacé par le piston et la chambre d'air sous pression, quelles que soient les conditions de fonctionnement du dispositif faisant l'objet du brevet français n° 2 157 107 précité, et du fait de la constance de la

3

section efficace de l'amortisseur et de l'absence d'une chambre de gaz suffisamment pressurisée dans le dispositif selon le brevet français n° 1 019 546 également précité.

Au moyen de l'amortisseur selon la présente invention, on se propose de remédier aux inconvénients, présentés par les différentes réalisations connues d'amortisseur, en faisant en sorte que, quelle que soit la vitesse d'enfoncement de la tige dans le cylindre, au-delà d'un seuil particulier à l'amortisseur, ce dernier se comporte comme un limiteur d'effort, n'absorbant plus d'énergie mais l'introduisant surtout aucune pointe d'effort sur la queue de l'aérodyne.

A cet effet, l'amortisseur pour béquille de queue d'aérodyne selon l'invention, comprend un cylindre dans lequel est montée coulissante avec étanchéité une tige, dont l'extrémité interne au cylindre porte un piston présentant au moins un orifice permanent de section constante, pour le laminage en compression, mettant en communication un volume de fluide hydraulique, reçu dans la chambre définie par le piston et le cylindre, avec celui de la chambre annulaire définie par le piston, le cylindre et la tige, l'amortisseur comprenant également une chambre de gaz sous pression, comprimée lors de l'enfoncement de la tige dans le cylindre sous une charge, et assurant le retour en position initiale de la tige dans le cylindre en l'absence de charge, et se caractérise en ce que la section constante du ou des orifices permanents est telle que, pour toute vitesse d'enfoncement de la tige dans le cylindre inférieure à un second seuil de vitesse choisi ($V_4$), il se produise un amortissement, avec une section

0014134

4

efficace d'amortisseur égale à celle (s) de la tige, et par laminage du fluide au travers du ou des orifices permanents, sans cavitation dans la chambre annulaire sur toute la course $(C_M)$ du piston dans le cylindre si la vitesse d'enfoncement est, de plus, inférieure à un premier seuil de vitesse choisi $(V_1)$ inférieur au second $(V_4)$, et avec cavitation dans la chambre annulaire sur une première partie de la course, puis par laminage au travers du ou des orifices permanents sur le reste de la course, si la vitesse d'enfoncement est comprise entre les deux seuils, et que, pour toute vitesse d'enfoncement supérieure au second seuil $(V_4)$, la section efficace de l'amortisseur est celle (S) d'un alésage interne au cylindre, dans lequel coulisse le piston, l'amortisseur se comportant alors comme un limiteur de l'effort qu'il transmet du sol à la queue de l'aérodyne par l'intermédiaire, successivement, d'un élément destiné à entrer en contact avec le sol, et porté par la tige à son extrémité externe au cylindre, de la tige elle-même et du piston du volume de fluide hydraulique, de la chambre de gaz sous pression, logée dans la chambre définie par le piston dans le cylindre qui reçoit le volume de fluide, adjacente à ce dernier et sans interposition d'orifice entre eux, et enfin du cylindre rattaché à la queue de l'aérodyne.

La présente invention sera mieux comprise à l'aide d'un exemple particulier de réalisation, qui sera décrit ci-après, à titre non limitatif, en référence aux figures en annexe dans lesquelles :

- la figure 1 représente, en coupe axiale, l'amortisseur pour béquille en position détendue,

- et la figure 2 représente des courbes de l'effort

5

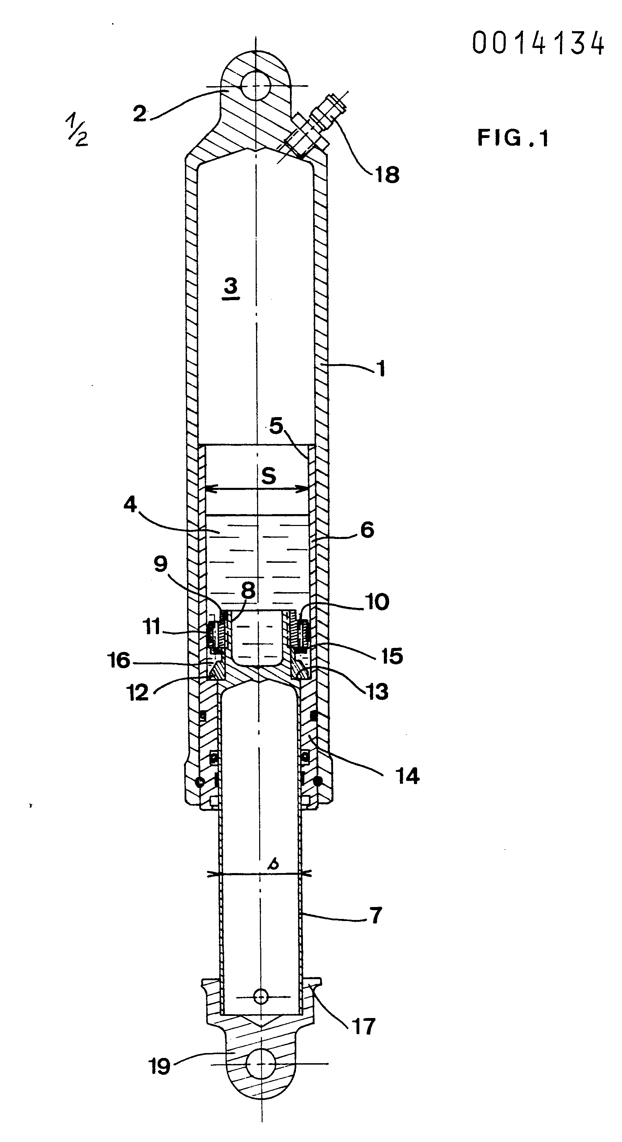

subi par l'amortisseur selon la figure 1 en fonction de la course de la tige d'amortisseur dans le cylindre, pour différentes vitesses d'enfoncement de la tige dans le cylindre.

L'amortisseur est constitué d'un cylindre 1 muni, à son extrémité supérieure, d'une attache 2 par laquelle le cylindre est solidarisé à la queue de l'aérodyne, et renfermant une chambre de gaz sous pression 3, adjacente à un volume de fluide hydraulique 4 reçu dans un alésage de grand diamètre 5 d'une chemise 6, disposée à l'intérieur du cylindre 1 et solidarisée à la base de ce dernier. La chemise 6 présente également un alésage de petit diamètre faisant office de palier de guidage d'une tige 7 montée coulissante avec étanchéité dans la chemise 6 du cylindre 1, cette tige 7 portant, à son extrémité inférieure, une attache 19 de liaison à un élément destiné à entrer en contact avec le sol, par exemple un patin ou une roulette de queue. L'extrémité supérieure de la tige 7 est constituée d'une partie rétrécie 8, présentant un filetage sur lequel est vissé un écrou 9, de forme extérieure cylindrique, et percé de plusieurs orifices permanents de laminage 10. Un segment racleur 11 est reçu dans une gorge annulaire pratiquée à la surface latérale externe de l'écrou 9, qui constitue ainsi un piston monté en bout de la tige 6 et coulissant dans l'alésage 5. L'écrou 9 applique, de plus, une entretoise 12 contre l'épaulement 13 bordant la partie rétrécie 8 de la tige 7, de sorte que l'entretoise 12, en venant en butée contre la partie 14 de plus petit diamètre interne de la chemise 6, limite la sortie de la tige 7 hors du cylindre 1. De plus, un clapet de freinage en détente 15, constitué d'un disque

6

annulaire percé d'un diaphragme, est disposé dans la chambre annulaire de fluide hydraulique 16, en regard des orifices permanents de laminage en compression, le clapet 15 étant limité dans ses déplacements par l'écrou 9 et l'entretoise 12. Enfin, l'attache 19, portée à l'extrémité inférieure de la tige 7, présente une butée 17, limitant l'enfoncement maximal de la tige 7 dans le cylindre 1, et déterminant avec l'extrémité inférieure de la chemise 6 la course maximale $C_M$ de la tige 7 dans le cylindre 1. L'alésage 5 de la chemise 6 a une profondeur telle que le piston 9 puisse effectuer la course maximale $C_M$ dans la chemise 6, et le volume 4 de fluide hydraulique est légèrement supérieur au volume de la chambre annulaire 16, lorsque la tige 7 a effectué la course maximale dans le cylindre 1, de sorte que dans cette position, le piston 9 ne soit surmonté que d'un faible volume résiduel de fluide hydraulique. On obtient ainsi que le volume de fluide hydraulique 4 est toujours contenu dans l'alésage 5 de la chemise 6, quelque soit l'enfoncement de la tige 7 dans le cylindre 1, et le volume de la chambre de gaz 3 est grand par rapport au volume de fluide hydraulique 4. Si S est la section interne de l'alésage 5 de la chemise 6, si s est la section totale de la tige 7, et si p1 et p2 sont respectivement les pressions du fluide hydraulique dans la chambre annulaire 16 et dans le volume 4, la force d'amortissement est donnée par $Fa = p2\ S - p1\ (S-s)$

Si $\Delta p$ est la perte de charge au passage du piston 9, on obtient que $p2 = p1 + \Delta p$, d'où $Fa = p2\ s + (S-s)\ \Delta p$.

Pour un enfoncement de la tige 7 avec une vitesse quasiment nulle dans le cylindre 1, on obtient $\Delta p = 0$

soit $Fa = p2\ s$

7

Par contre, pour un enfoncement avec une vitesse suffisamment grande pour que l'effet du laminage par les orifices 10 soit négligeable et qu'il se produise une cavitation dans la chambre annulaire 16, le piston 9 et la tige 7 se comportant comme si un piston de section S se déplaçait dans l'alésage 5, on peut considérer que $\Delta p = p2$, ce qui donne $Fa = p2 \, S$.

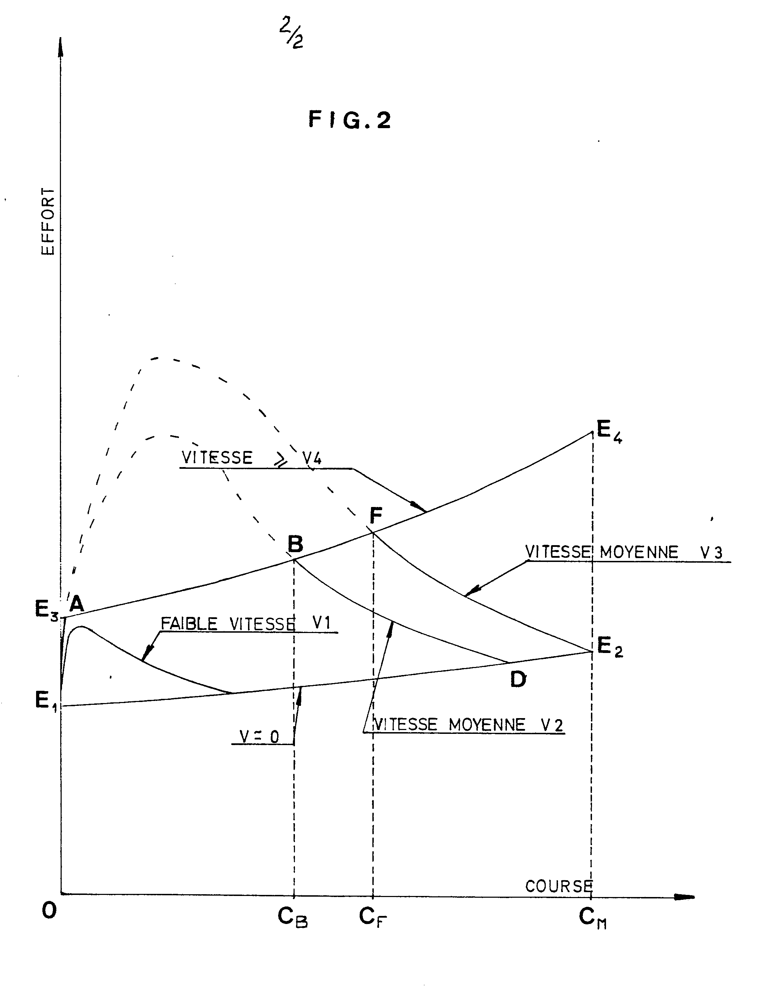

Pour une pression de gonflage initial $p_O$ de la chambre 3 par la valve 18, on obtient alors que les courbes d'effort en fonction de la course de cet amortisseur sont limitées entre la courbe statique E1E2 d'une part, obtenue à vitesse quasi-nulle, et correspondant à p2 s, le seuil d'effort au-delà duquel il se produira une course étant $E1 = p_O \, s$, et la courbe E3E4 correspondant à p2 S d'autre part, comme cela apparaît sur la figure 2. Il est à remarquer que la courbe E1E2 sera d'autant plus plate que le volume de la chambre 3 et la pression initiale de gonflage $p_O$ seront importants.

Si la section de passage des orifices permanents de laminage 10 est calculée pour qu'il se produise un amortissement avec laminage sur toute la course, et sans cavitation dans la chambre annulaire 16, pour toute vitesse d'enfoncement de la tige 7 inférieure ou égale à un premier seuil de vitesse $V_1$ de l'ordre de 1 m/s, le fonctionnement de l'amortisseur sera le suivant : pour une vitesse d'enfoncement moyenne V2, de l'ordre de 3 m/s, on se déplacera sur la courbe E1,A,BD,E2, avec cavitation dans la chambre 16 sur la course $0, C_B$ puis amortissement sur la course $C_B, C_M$.

Pour une vitesse d'enfoncement moyenne V3, de l'ordre de 3,6 m/s, on se déplacera pratiquement sur la

0014134

8

courbe E1,AF,E2, avec cavitation dans la chambre 16 sur la course $0,C_F$, puis amortissement sur la course $C_F,C_M$. Enfin, pour toute vitesse d'enfoncement supérieure ou égale à un second seuil de vitesse V4 de l'ordre de 5 m/s, on se déplacera sur la courbe E3,E4, avec cavitation dans la chambre 16 sur toute la course $0,C_M$, donc sans amortissement, le dispositif se comportant alors comme un limiteur de l'effort qu'il transmet du sol à la queue de l'aérodyne.

L'équipement des béquilles de queue d'aérodyne avec des amortisseurs selon la présente invention permettra ainsi d'éviter d'endommager la structure de l'aérodyne, en cas de contact avec le sol s'effectuant avec toute vitesse verticale supérieure aux vitesses normales d'atterrissage, pour lesquelles le dispositif procurera un amortissement.

0014134

<u>R E V E N D I C A T I O N S</u>

1/ Amortisseur oléopneumatique du type télescopique pour béquille de queue d'aérodyne, comprenant un cylindre (1) dans lequel est montée coulissante avec étanchéité une tige (7), dont l'extrémité interne au cylindre (1) porte un piston
(9-11) présentant au moins un orifice permanent (10)
de section constante, pour le laminage en compression, mettant en communication un volume de fluide
hydraulique (4), reçu dans la chambre définie par
le piston (9-11) et le cylindre (1), avec celui de
la chambre annulaire (16) définie par le piston
(9-11), le cylindre (1) et la tige (7), l'amortisseur comprenant également une chambre de gaz sous
pression (3), comprimée lors de l'enfoncement de
la tige (7) dans le cylindre (1) sous une charge,
et assurant le retour en position initiale de la
tige (7) dans le cylindre en l'absence de charge,
caractérisé en ce que la section constante du ou des
orifices permanents (10) est telle que, pour toute
vitesse d'enfoncement de la tige (7) dans le cylindre (1) inférieure à un second seuil de vitesse
choisi $(V_4)$, il se produise un amortissement, avec
une section efficace d'amortisseur égale à celle (s)
de la tige (7), et par laminage de fluide au travers du ou des orifices permanents (10), sans cavitation dans la chambre annulaire (16) sur toute la
course $(C_M)$ du piston (9-11) dans le cylindre (1)
si la vitesse d'enfoncement est, de plus, inférieure
à un premier seuil de vitesse choisi $(V_1)$ inférieur
au second $(V_4)$, et avec cavitation dans la chambre
annulaire (16) sur une première partie de la course,
puis par laminage au travers du ou des orifices
permanents (10) sur le reste de la course, si la vitesse d'enfoncement est comprise entre les deux seuils, et que, pour toute vitesse d'enfoncement supérieure au second seuil ($V_4$), la section efficace de l'amortisseur est celle (S) d'un alésage interne (5) au cylindre (1), dans lequel coulisse le piston (9-11), l'amortisseur se comportant alors comme un limiteur de l'effort qu'il transmet du sol à la queue de l'aérodyne par l'intermédiaire, successivement, d'un élément destiné à entrer en contact avec le sol, et porté par la tige (7) à son extrémité externe au cylindre (1), de la tige (7) elle-même et du piston (9-11), du volume de fluide hydraulique (4), de la chambre de gaz sous pression (3), logée dans la chambre définie par le piston (9-11) dans le cylindre (1) qui reçoit le volume de fluide (4), adjacente à ce dernier et sans interposition d'orifice entre eux, et enfin du cylindre (1) rattaché à la queue de l'aérodyne.

2/ Amortisseur selon la revendication 1, caractérisé en ce qu'un clapet de freinage en détente (15) est disposé en regard de l'orifice permanent de laminage (10), dans la chambre annulaire (16).

3/ Amortisseur selon l'une des revendications 1 à 2, caractérisé en ce que le piston (9+11) porté par l'extrémité (8) de la tige (7) est monté coulissant dans une chemise (6) interne au cylindre (1) et solidaire de ce dernier à son extrémité libre.

4/ Amortisseur selon la revendication 3, caractérisé en ce que la tige (7) est guidée dans le cylindre (1) par la chemise (6) qui présente un épaulement interne faisant office de butée limitant la sortie de la tige (7) hors du cylindre (1).

5/ Amortisseur selon la revendication 4, caractérisé en ce que le piston (9+11) est constitué

11

sous la forme d'un écrou (9), muni d'un segment racleur (11), vissé sur une partie rétrécie (8) de l'extrémité de la tige (1), et calant contre un épaulement (13) limitant la partie rétrécie (8), une entretoise (12) susceptible de venir en contact de la butée présentée par la chemise (6) et limitant la sortie de la tige (7).

6/ Amortisseur selon la revendication 5, caractérisé en ce que l'entretoise (12) constitue également une butée limitant les déplacements du clapet (15) de freinage en détente.

7/ Amortisseur selon l'une des revendications 3 à 5, caractérisé en ce que le volume de fluide hydraulique (4) adjacent à la chambre de gaz sous pression (3) est, en toute position de la tige (7) dans le cylindre (1), contenu dans la chemise (5).

8/ Amortisseur selon l'une des revendications 1 à 6, caractérisé en ce que le volume de la chambre de gaz (3) est grand par rapport au volume adjacent de fluide hydraulique (4).

0014134

FIG.1

FIG.2

0014134

2/2

Office européen
des brevets

**RAPPORT DE RECHERCHE EUROPEENNE**

0014134

Numéro de la demande

EP 80 40 0074

| Catégorie | Citation du document avec indication, en cas de besoin, des parties pertinentes | Revendication concernée |
|---|---|---|
| | FR - A - 1 019 546 (FERRAROTTI)<br>* Page 1, colonne de gauche, lignes 20-29; colonne de droite, lignes 32-43 * | 1 |
| | -- | |
| | FR - A - 2 355 210 (FEUGEOT)<br>* Page 3, lignes 9-29 * | 1 |
| | -- | |
| | FR - A - 2 157 107 (THOMAS)<br>* Page 5, lignes 1-8 * | 1 |
| | -- | |
| A | US - A - 4 126 212 (CRAWLEY) | |
| A | FR - A - 2 362 310 (TOKICO) | |
| A | FR - A - 2 015 261 (STABILUS) | |
| A | FR - A - 1 224 493 (ROTOL) | |
| | -- -- | |

**DOCUMENTS CONSIDERES COMME PERTINENTS**

**CLASSEMENT DE LA DEMANDE (Int. Cl.)**

B 64 C 25/58
F 16 F 9/06

**DOMAINES TECHNIQUES RECHERCHES (Int. Cl.)**

B 64 C 25/00
F 16 F 9/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 22-04-1980 | HAUGLUSTAINE |

OEB Form 1503.1   06.78